# EUROPEAN PATENT APPLICATION

(11) **EP 4 636 989 A1**
(43) Date of publication of application: **22.10.2025**
(21) Application number: 23918763.6
(22) Date of filing: 06.12.2023
(51) Int. Cl.: H02J 50/10, H02J 50/90, H02J 50/80, H02J 7/00, H04B 5/70

(54) **ELECTRONIC DEVICE AND WIRED/WIRELESS CHARGING CONTROL METHOD IN ELECTRONIC DEVICE**

(30) Priority: 25.01.2023 KR 20230009613; 16.02.2023 KR 20230020614
(71) Applicant: Samsung Electronics Co., Ltd., Suwon-si, Gyeonggi-do 16677 (KR)
(72) Inventor: SHIN, Seungshik, Suwon-si, Gyeonggi-do 16677 (KR); KIM, Mooyoung, Suwon-si, Gyeonggi-do 16677 (KR); KIM, Taewoong, Suwon-si, Gyeonggi-do 16677 (KR); PARK, Baewon, Suwon-si, Gyeonggi-do 16677 (KR); PARK, Sehyoung, Suwon-si, Gyeonggi-do 16677 (KR); CHO, Woosik, Suwon-si, Gyeonggi-do 16677 (KR); CHOI, Jinsik, Suwon-si, Gyeonggi-do 16677 (KR)
(74) Representative: Gulde & Partner
(86) International application number: PCT/KR2023/020004
(87) International publication number: WO 2024/158128

(57) **Abstract**

An electronic device according to an embodiment comprises: a battery; wireless charging circuit including rectifying circuitry for rectifying alternating current power received wirelessly through an antenna module, and a regulator that converts a voltage of rectified direct current power to a designated battery charging voltage and outputs same; a power management module that charges the battery on the basis of the power output from the wireless charging circuitry; wired charging circuitry for charging the battery on the basis of power received by wire through a connector; and a processor, wherein the processor may be configured to: identify entry to a wireless charging standby state on the basis of a wireless-charging connection through the wireless charging circuitry and a wired-charging connection through the wired charging circuitry; control, upon the entry to the wireless charging standby state, an output voltage of the wireless charging circuitry to become a designated voltage that is lower than the battery charging voltage; and turn off the regulator so that the power is not provided from the wireless charging circuitry to the power management module after a designated time period in a state where the output voltage reaches the designated voltage. The present invention may include other different embodiments.

## Description

### [Technical Field]

Various embodiments of the disclosure relate to an electronic device and a wired/wireless charging control method in the electronic device.

### [Background Art]

Recent advancing information communication technologies and semiconductor technologies accelerate the spread and use of various electronic devices. In particular, recent electronic devices are being developed to carry out communication while carried on.

As the use of various portable electronic devices increases, interest in battery performance and battery charging schemes that affect the performance and usage time of electronic devices is increasing. Electronic devices capable of wireless charging, as well as wired charging as battery charging schemes have been provided, and electronic devices capable of both wired charging and wireless charging are also being provided.

The above-described information may be provided as related art for the purpose of helping understanding of the disclosure. No claim or determination is made as to whether any of the foregoing is applicable as background art in relation to the disclosure.

### [Detailed Description of the Invention]

### [Technical Problem]

An electronic device capable of wired charging and wireless charging may perform connection for wired charging and connection for wireless charging together (or simultaneously).

Since the likelihood of heat generation in the battery may be high and the charging efficiency may be low when the electronic device has a connection for wired charging and a connection for wireless charging, it is possible to reduce the likelihood of heat generation and increase charging efficiency by selecting a charging scheme (e.g., wired charging scheme) capable of receiving higher power out of wired charging and wireless charging and charging the battery. For example, when the electronic device is connected to the wired charger (e.g., an outlet or USB power source) in a state in which the electronic device (e.g., smartphone) is placed on the wireless charger (e.g., wireless charging pad) to have a connection for wireless charging, or the electronic device is placed on the wireless charger in a state in which the electronic device is connected to the wired charger, the electronic device may perform wired charging using the power from the wired charger while maintaining the wireless charging by the wireless charger in the standby state. When the electronic device performs wired charging while maintaining the wireless charging in the standby state, even when wireless charging is not performed, the heat from the wireless charging coil and the heat from wired charging are added, quickly leading to a quick increase in heat generation in the electronic device, which may cause charging to be stopped.

The electronic device may turn off (or cut off) the output voltage Vout that is output from the wireless charging integrated chip (IC) to maintain the wireless charging in the standby state. However, an AC signal may flow into the wireless charging IC through the antenna module even in the wireless charging standby state, and the introduced AC signal may excessively increase the rectification voltage Vrect by the rectification circuit in the wireless charging IC. Further, when the rectification voltage Vrect is excessively increased, heat generation may occur in the wireless charging IC, damaging some circuits in the wireless charging IC.

Further, when the electronic device turns off the wireless charging IC to maintain the wireless charging in the standby state, the wireless charger may not recognize the electronic device due to the off of the wireless charging IC, so that other additional operations associated with power transmission may also be stopped. Therefore, it may be hard to adopt the method of turning off the wireless charging IC for general purposes. For example, some vehicle charging pads may identify that the electronic device to be charged, held thereby, is not present if the wireless charging IC of the electronic device is turned off, and stop holding the electronic device (i.e., release the electronic device), causing the electronic device to fall and get damaged. Therefore, the method of turning off the wireless charging IC to maintain the wireless charging in the standby state may not be adopted.

### [Technical Solution]

An electronic device according to an embodiment may comprise a battery, wireless charging circuitry including rectification circuitry rectifying AC power wirelessly received through an antenna module and a regulator converting a voltage of rectified DC power into a designated battery charging voltage and outputting the designated battery charging voltage, a power management module charging the battery based on power output from the wireless charging circuitry, wired charging circuitry charging the battery based on power wiredly received through a connector, memory storing instructions, and a processor operatively connected to the power management module, the wired charging circuitry, and the memory. The instructions according to an embodiment may, when executed by the processor, cause the electronic device to identify entry into a wireless charging standby state based on a wireless charging connection through the wireless charging circuitry and a wired charging connection through the wired charging circuitry. The processor according to an embodiment may, upon entry into the wireless charging standby state, control an output voltage of the wireless charging circuitry to be a designated voltage lower than a battery charging voltage. The processor according to an embodiment may turn off the regulator not to provide the power from the wireless charging circuitry to the power management module, a designated time period after the output voltage becomes the designated voltage.

A method for controlling wired/wireless charging in an electronic device according to an embodiment may comprise identifying entry into a wireless charging standby state based on a wireless charging connection through wireless charging circuitry of the electronic device and a wired charging connection through wired charging circuitry of the electronic device. The method according to an embodiment may comprise, upon entry into the wireless charging standby state, controlling an output voltage of the wireless charging circuitry to be a designated voltage lower than a battery charging voltage. The method according to an embodiment may comprise turning off a regulator not to provide power from the wireless charging circuitry to a power management module, a designated time period after the output voltage becomes the designated voltage.

In a non-volatile storage medium storing instructions configured to, when executed by an electronic device, cause the electronic device to perform at least one operation, according to an embodiment, the at least one operation may comprise identifying entry into a wireless charging standby state based on a wireless charging connection through wireless charging circuitry of the electronic device and a wired charging connection through wired charging circuitry of the electronic device. The at least one operation according to an embodiment may comprise, upon entry into the wireless charging standby state, controlling an output voltage of the wireless charging circuitry to be a designated voltage lower than a battery charging voltage. The at least one operation according to an embodiment may comprise turning off a regulator not to provide power from the wireless charging circuitry to a power management module, a designated time period after the output voltage becomes the designated voltage.

### [Advantageous Effects]

According to an embodiment, when performing wired charging while maintaining the wireless charging in the standby state, the electronic device may reduce the output voltage of the wireless charging IC to the minimum voltage capable of communication with the wireless charger without turning off the wireless charging IC, thereby allowing the wireless charger to recognize the electronic device and reducing heat generation.

According to an embodiment, when performing wired charging while maintaining the wireless charging in the standby state, the electronic device may reduce the output voltage of the wireless charging IC to the minimum voltage capable of communication with the wireless charger and turn off the output voltage Vout of the wireless charging IC after a designated time when the reduced output voltage of the wireless charging IC may be identified by the wireless charger, thereby reducing the amount of AC signals introduced into the wireless charging IC through the antenna module from the wireless charger in the wireless charging standby state and hence preventing the rectification voltage Vrect from being excessively increased by the rectification circuitry in the wireless charging IC.

### [Brief Description of Drawings]

FIG. 1 is a block diagram illustrating an electronic device in a network environment according to an embodiment;
FIG. 2 is a block diagram illustrating an electronic device according to an embodiment;
FIG. 3 is a circuit diagram illustrating an antenna module and a wireless charging IC according to an embodiment;
FIG. 4 is a flowchart illustrating a method for controlling wired/wireless charging in an electronic device according to an embodiment;
FIG. 5 is a flowchart illustrating a wired/wireless charging control operation according to whether there is a wired charging connection in a wireless charging connected state in an electronic device according to an embodiment;
FIG. 6A is a flowchart illustrating a wired/wireless charging control operation when a first external device identification (ID) during wireless charging connection and wired charging connection is an ID designated for entering into a wireless charging standby state in an electronic device according to an embodiment;
FIG. 6B is a flowchart illustrating a wired/wireless charging control operation when a first external device ID during wireless charging connection and wired charging connection is an ID designated for turning off a wireless charging IC in an electronic device according to an embodiment;
FIG. 7A is a view illustrating a voltage waveform of a rectification circuit when an output voltage of a wireless charging IC is reduced and, before a designated time period, an LDO of the wireless charging IC is turned off according to an embodiment;
FIG. 7B is a view illustrating a voltage waveform of a rectification circuit when an output voltage of a wireless charging IC is reduced and, after a designated time period, an LDO of the wireless charging IC is turned off according to an embodiment;
FIG. 8A is a view illustrating an example of a temperature of heat generation on a front surface of an electronic device upon connection for wireless charging and connection for wired charging in an electronic device according to an embodiment; and
FIG. 8B is a view illustrating an example of a temperature of heat generation on a rear surface of an electronic device upon connection for wireless charging and connection for wired charging in an electronic device according to an embodiment.

### [Mode for Carrying out the Invention]

Various embodiments of the present disclosure are now described with reference to the accompanying drawings. As used herein, the term "user" may denote a human or another device using the electronic device.

The terms as used herein are provided merely to describe some embodiments thereof, but not to limit the scope of other embodiments of the present disclosure. It is to be understood that the singular forms "a, " "an," and "the" include plural references unless the context clearly dictates otherwise. All terms including technical and scientific terms used herein have the same meaning as commonly understood by one of ordinary skill in the art to which the embodiments of the present disclosure belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In some cases, the terms defined herein may be interpreted to exclude embodiments of the present disclosure.

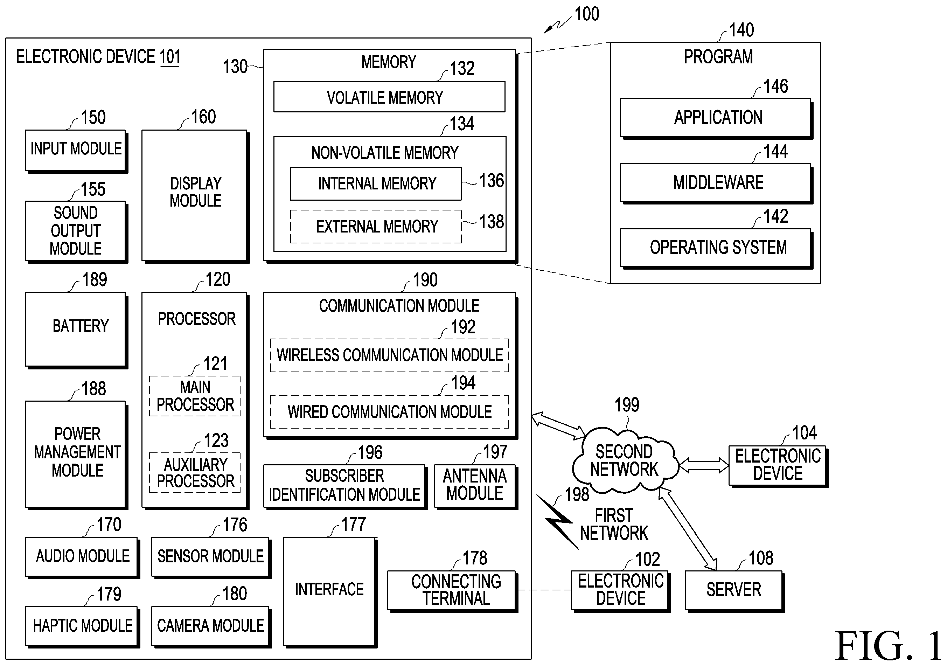

FIG. 1 is a block diagram illustrating an electronic device 101 in a network environment 100 according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

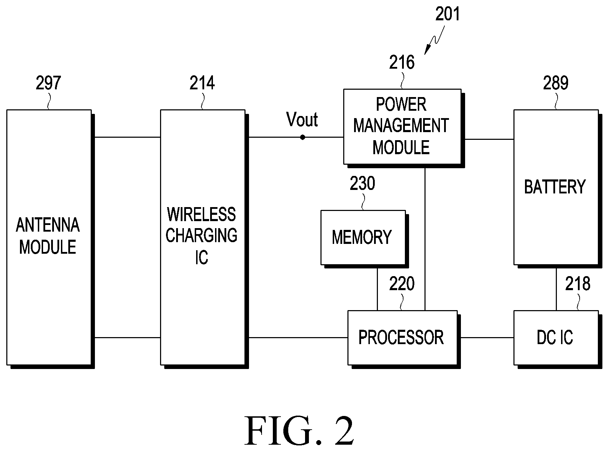

FIG. 2 is a block diagram illustrating an electronic device 201 according to an embodiment.

Referring to FIG. 2, the electronic device 201 (or wireless power reception device) (e.g., the electronic device 101 of FIG. 1) according to an embodiment may include all or some of an antenna module 297 (e.g., the antenna module 197 of FIG. 1), a wireless charging integrated chip (IC) (e.g., a magnetic field controller integrated circuit (MFC IC) (also referred to as wireless charging circuitry) 214, a power management module (power management integrated chip (PMIC) or an interface (IF) PMIC) 216, a direct charging integrated chip (DC IC) (also referred to as wired charging circuitry) 218, a processor 220 (e.g., the processor 120 of FIG. 1), memory 230 (e.g., the memory 130 of FIG. 1), and a battery 289 (e.g., the battery 189 of FIG. 1). The electronic device 201 according to an embodiment is not limited thereto and may add more components or exclude some of the above-described components. The electronic device 201 according to an embodiment may further include all or some (e.g., memory (e.g., the memory 130 of FIG. 1), the display 160, the communication module 190, and the power management module 188) of the electronic device 101 illustrated in FIG. 1.

The antenna module 297 according to an embodiment may include at least one coil. According to an embodiment, at least one coil may include a coil for wireless power reception (e.g., near field magnetic induction (NFMI). The shape, length, or/and number of turns of each of the at least one coil according to an embodiment may have a shape, length, or/and number of turns used to wirelessly receive power.

The wireless charging IC (or wireless charging circuitry) 214 according to an embodiment may be connected to the antenna module 297. The wireless charging IC 214 according to an embodiment may perform a wireless power reception operation using at least one coil included in the antenna module 297. According to an embodiment, the wireless charging IC 214 may include wireless power reception circuitry (e.g., rectification circuitry, a low-drop out (LDO) regulator or a switching regulator) for wireless power reception. The wireless power reception circuitry according to an embodiment may rectify the power of the AC waveform received through the antenna module 297 to generate a DC voltage (e.g., Vrect), convert the DC voltage Vrect to a battery charging voltage using a regulator LDO (or a main low drop out (MLDO) among a plurality of LDOs) and output the converted voltage Vout. The output voltage Vout of the wireless charging IC 214 may be transferred to the power management module 216. The wireless charging IC 214 according to an embodiment may transmit a power control packet (e.g., a control error packet (CEP)) to an external electronic device (e.g., a wireless power transmission device or a wireless charger) when wireless power is received, and receive the power of AC waveforms that has undergone operation frequency adjustment and duty control based on the CEP signal from the external electronic device.

The power management module 216 according to an embodiment may be connected between the wireless charging IC 214 and the battery 289. The power management module 216 according to an embodiment may charge the battery 289 using the power supplied from an external power source for the electronic device 201. According to an embodiment, the power management module 216 may select a charging scheme (e.g., wired charging or wireless charging) selected based on the type of external power source (e.g., power outlet, USB or wireless charging) or the magnitude of power that may be supplied from each external power source, and charge the battery 289 using the selected charging scheme. The external power source may include, e.g., a second external device that is wiredly connected through a connector or a connecting terminal (e.g., the connecting terminal 178 of FIG. 1) to supply power, or a first external device that is wirelessly connected through the antenna module 297 to supply power wirelessly. The power management module 216 may update the processor 220 with the selected charging scheme. The power management module 216 according to an embodiment may update the processor 220 with at least one currently available external power source, information about rechargeable power of each of the currently available at least one external power source, and/or the current charging state using the selected charging scheme.

The DC IC (or wired charging circuitry) 218 according to an embodiment may receive power at a voltage of a predetermined multiple of the battery voltage from the second external device (e.g., wired charger, power outlet, or USB) wiredly supplying power, without passing through the power management module 216 and divide the same using a cap divider and allow the divided power to be directly input to the battery 289. The DCIC 218 according to an embodiment may directly update the processor 220 with the state of charge of the battery 289 and/or the available charging power.

The processor 220 (e.g., an application processor) according to an embodiment may perform an overall control operation of the electronic device 201.

The processor 220 according to an embodiment may identify a connection with an external power source (e.g., a first external device (not illustrated)) that wirelessly supplies power and/or a connection with an external power source (e.g., a second external device (not illustrated)) that wiredly supplies power based on the information updated from the power management module 216. The processor 220 according to an embodiment may identify the connection with the second external device that wiredly supplies power based on information updated from the DCIC 218. For example, the first external device and the second external device may be devices that supply power wiredly and wirelessly, respectively, as one device.

The processor 220 according to an embodiment may identify a connection for wireless charging and a connection for wired charging. According to an embodiment, the processor 220 may identify that the connection for wireless charging with the first external device and the connection for wired charging with the second external device are performed together (or simultaneously). According to an embodiment, the processor 220 may identify the connection for wired charging with the second external device while performing wireless charging through the connection for wireless charging with the first external device, or identify the wireless charging connection for wireless charging with the first external device during wired charging through the connection for wired charging with the second external device. According to an embodiment, the connection for wireless charging with the first external device may be identified by a power transfer phase state based on a wireless charging protocol between the electronic device 201 and the first external device or by information updated from the power management module 216 based on the output voltage Vout from the wireless charging IC 214. According to an embodiment, the connection for wired charging with the second external device may be identified by information updated from the power management module 216 or the DC IC 218 as power by an external power source is wiredly applied to the power management module 216 or the DC IC 218.

The processor 220 according to an embodiment may identify the entry into the wireless charging standby state based on identifying the connection for wireless charging with the first external device and the connection for wired charging with the second external device.

The processor 220 according to an embodiment may identify the entry into the wireless charging standby state based on identifying the connection for wireless charging with the first external device and the connection for wired charging with the second external device, or may determine (or select or identify) whether to turn off the wireless charging IC 214 or enter the wireless charging standby state based on the ID of the first external device. When identifying whether to turn off the wireless charging IC 214 or enter the wireless charging standby state based on the ID of the first external device, the processor 220 according to an embodiment may identify whether the ID of the first external device is an ID designated to turn off the wireless charging IC 214 or an ID designated to enter the wireless charging standby state. When it is determined to turn off the wireless charging IC 214 based on the ID of the first external device, the processor 220 according to an embodiment may turn off the wireless charging IC 214 and perform wired charging. The processor 220 according to an embodiment may identify the entry into the wireless charging standby state based on the ID of the first external device.

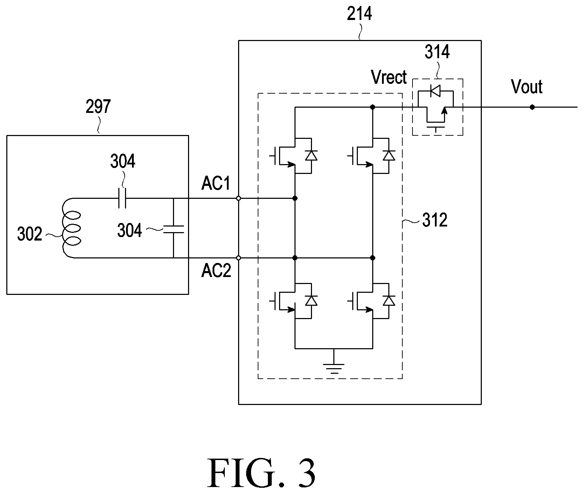

The processor 220 according to an embodiment may control the output voltage (wireless charging voltage or target voltage) Vout of the wireless charging IC 214 to be decreased to a designated voltage based on identifying the entry into the wireless charging standby state. According to an embodiment, the designated voltage may be a minimum voltage capable of communicating with the first external device for wireless power reception. The processor 220 according to an embodiment may turn off the LDO of the wireless charging IC 214 after a designated time period in a state where the output voltage Vout of the wireless charging IC 214 becomes a designated voltage. The processor 220 according to an embodiment may control (e.g., turn off) the LDO (or MLDO) included in the wireless charging IC 214 so that the output voltage Vout of the wireless charging IC 214 is removed (or cut off or become a value close to about 0) after the designated time period in a state in which the output voltage Vout of the wireless charging IC 214 is the designated voltage. According to an embodiment, the designated time may be a time taken for the output voltage Vout of the wireless charging IC 214 reduced to the designated voltage to be identified by the first external device. According to an embodiment, the output voltage Vout of the wireless charging IC 214, which is reduced to the designated voltage as at least one CEP signal is transmitted to the first external device for the designated time may be identified by the first external device. According to an embodiment, the designated time may be determined based on the number of power control packets (e.g., control error packets (CEPs)) transmitted as the output voltage Vout of the wireless charging IC 214 decreases. For example, the designated time may be determined based on Δ*t*(CEP transmission time (e.g., CEP interval min (e.g., 30 msec)))*n (natural number). The n (natural number) value according to an embodiment may be adjusted or changed based on the voltage Vrect level of the step-down rectification circuit (e.g., the rectification circuitry 312 of FIG. 3) and/or the absolute maximum rating (AMR) of the wireless charging IC 214.

The first external device according to an embodiment may transfer the power having a gradually reducing magnitude through duty control and/or operation frequency adjustment based on at least one CEP signal received from the electronic device 201 at the time of Δ*t***n.* The processor 220 according to an embodiment may perform wired charging while maintaining the wireless charging standby state (e.g., a state in which the LDO is turned off while the output voltage (wireless charging voltage or the target voltage) Vout of the wireless charging IC 214 is the designated voltage).

The memory 230 (e.g., the memory 130 of FIG. 1) according to an embodiment may store various data generated during the execution of the program 140 including a program (e.g., the program 140 of FIG. 1) used for a wired/wireless charging control operation for the battery 289. The memory 230 may include a program area 140 and a data area (not shown). The program area 140 may store relevant program information for driving the electronic device 201, such as an operating system (OS) (e.g., the OS 142 of FIG. 1) for booting the electronic device 201. For example, the memory 230 may include at least one storage medium of a flash memory, a hard disk, a multimedia card, a micro-type memory (e.g., a secure digital (SD) or an extreme digital (xD) memory), a random access memory (RAM), or a read only memory (ROM).

An electronic device (e.g., the electronic device 101 of FIG. 1 or the electronic device 201 of FIG. 2) according to an embodiment may comprise a battery (e.g., the battery 189 of FIG. 1 or the battery 289 of FIG. 2), wireless charging circuitry (e.g., the wireless charging IC 214 of FIG. 2) including rectification circuitry (e.g., the rectification circuitry 312 of FIG. 3) rectifying AC power wirelessly received through an antenna module (e.g., the antenna module 197 of FIG. 1 or the antenna module 297 of FIG. 2) and a regulator (e.g., the LDO 314 of FIG. 3) converting a voltage of rectified DC power into a designated battery charging voltage and outputting the designated battery charging voltage, a power management module (e.g., the power management module 188 of FIG. 1 or the power management module 216 of FIG. 2) charging the battery based on power output from the wireless charging circuitry, wired charging circuitry (e.g., the DC IC 218 of FIG. 2) charging the battery based on power wiredly received through a connector (e.g., the connecting terminal 178 of FIG. 1), memory (the memory 130 of FIG. 1 or the memory 230 of FIG. 2) storing instructions, and a processor (e.g., the processor 120 of FIG. 1 or the processor 220 of FIG. 2) operatively connected to the power management module, the wired charging circuitry, and the memory. The instructions according to an embodiment may, when executed by the processor, cause the electronic device to identify entry into a wireless charging standby state based on a wireless charging connection through the wireless charging circuitry and a wired charging connection through the wired charging circuitry. The instructions according to an embodiment may, when executed by the processor, cause the electronic device to, upon entry into the wireless charging standby state, control an output voltage of the wireless charging circuitry to be a designated voltage lower than a battery charging voltage. The instructions according to an embodiment may, when executed by the processor, cause the electronic device to turn off the regulator not to provide the power from the wireless charging circuitry to the power management module, a designated time period after the output voltage becomes the designated voltage.

The instructions according to an embodiment may further be configured to, when executed by the processor, cause the electronic device to identify a connection for wireless charging with a first external device based on a level of the voltage of the DC power rectified by the rectification circuitry.

The instructions according to an embodiment may further be configured to, when executed by the processor, cause the electronic device to identify a connection for the wired charging using information updated from the power management module or the wired charging circuitry as power is wiredly applied by an external power source through the connector.

The instructions according to an embodiment may further be configured to, when executed by the processor, cause the electronic device to identify whether an ID of a first external device connected for wireless charging through the wireless charging circuitry is a designated ID and, when the ID of the first external device is the designated ID, turn off the wireless charging circuitry.

The instructions according to an embodiment may further be configured to, when executed by the processor, cause the electronic device to, when the ID of the first external device connected for wireless charging through the wireless charging circuitry is not the designated ID, identify the entry into the wireless charging standby state.

The designated time period according to an embodiment may include a time period taken until a state in which the output voltage of the wireless charging circuitry is dropped to the designated voltage is identified by a first external device which is a target for the wireless charging connection.

The designated time period according to an embodiment may be designated based on a number of at least one control error packet (CEP) received from a first external device which is a target for the wireless charging connection as the output voltage of the wireless charging circuitry is dropped to the designated voltage.

FIG. 3 is a circuit diagram illustrating an antenna module and a wireless charging IC according to an embodiment.

Referring to FIG. 3, an antenna module 297 according to an embodiment may include at least one coil 302 and at least one capacitor 304. According to an embodiment, the at least one coil 302 may include a coil for wireless power transmission/reception (e.g., NFMI). According to an embodiment, two opposite ends (e.g., AC1 and AC2) of at least one coil 302 may be connected to the rectification circuitry 312 of the wireless charging IC 214. According to an embodiment, at least one capacitor 304 may have a capacitance value required for the antenna module 297 to maintain a designated inductance and resistance when wirelessly receiving power from the first external device through at least one coil 302.

The wireless charging IC 214 according to an embodiment may include a rectification circuitry 312 and an LDO (or MLDO) 314. The rectification circuitry 312 according to an embodiment may be connected to two opposite ends (e.g., AC1 and AC2) of at least one coil 302. The rectification circuitry 312 according to an embodiment may rectify the power of the AC waveform received through two opposite ends of at least one coil 302 to generate a DC voltage (e.g., Vrect). The LDO 314 according to an embodiment may convert (or reduce) the DC voltage (e.g., Vrect) generated from the rectification circuitry 312 to a battery charging voltage (e.g., about 5V) or a designated voltage (e.g., about 3V) lower than the battery charging voltage and output the converted voltage Vout.

The processor (e.g., the processor 220 of FIG. 2) according to an embodiment may turn off the LDO 314 in the wireless charging standby mode to remove or cut off the output voltage Vout output from the wireless charging IC 214. However, even in the wireless charging standby mode, electromagnetic induction may occur in the antenna module 297 by the external device (e.g., the first external device), and AC signals may be introduced into the wireless charging IC 214 through the antenna module 297. In the wireless charging standby mode, the AC signal introduced into the wireless charging IC 214 may be rectified by the rectification circuitry 312 in the wireless charging IC 214, and if the rectifying operation is performed while the LDO 314 is turned off, the rectification voltage Vrect may be excessively increased, causing heat generation in the wireless charging IC 214. Heat generation in the wireless charging IC 214 may burn some circuits in the wireless charging IC 214.

The processor 220 according to an embodiment may turn off the entire wireless charging IC 214 in the wireless charging standby mode to remove or cut off the output voltage Vout output from the wireless charging IC 214. However, when the entire wireless charging IC 214 is turned off, the external device (e.g., the first external device) may not recognize the electronic device 201 and thus may not be able to perform operations associated with power transmission.

When entering into the wireless charging standby mode, the processor 220 according to an embodiment may reduce the output voltage (wireless charging voltage or target voltage) Vout of the wireless charging IC 214 to a minimum voltage capable of communicating with the first external device and turn off the LDO 314 of the wireless charging IC 214 after a designated time period in a state where the output voltage Vout of the wireless charging IC 214 becomes a designated voltage, so that the first external device may identify the electronic device 201 as a target device for wireless power reception, and prevent the rectified voltage Vrect from being excessively decreased.

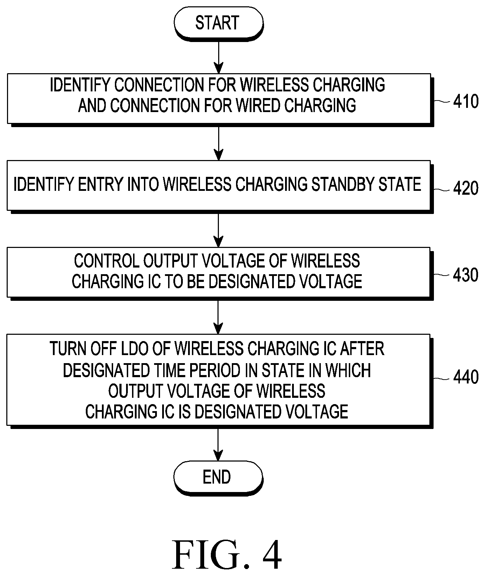

FIG. 4 is a flowchart illustrating a method for controlling wired/wireless charging in an electronic device according to an embodiment.

Referring to FIG. 4, according to an embodiment, a processor (e.g., the processor 120 of FIG. 1 or the processor 220 of FIG. 2) of an electronic device (e.g., the electronic device 101 of FIG. 1 or the electronic device 201 of FIG. 2) may perform at least one of operations 410 to 420.

In the following embodiment, each operation may be sequentially performed, but is not necessarily performed sequentially. For example, the order of the operations may be changed, and at least two operations may be performed in parallel.

In operation 410, the processor 220 according to an embodiment may identify a connection for wireless charging and a connection for wired charging. According to an embodiment, the processor 220 may identify that the connection for wireless charging with the first external device and the connection for wired charging with the second external device are performed together (or simultaneously). According to an embodiment, the processor 220 may identify the connection for wired charging with the second external device while performing wireless charging through the connection for wireless charging with the first external device, or identify the wireless charging connection for wireless charging with the first external device during wired charging through the connection for wired charging with the second external device. According to an embodiment, the processor 220 may identify the connection for wireless charging with the first external device based on a wireless charging protocol-based power transfer phase between the electronic device 201 and the first external device or identify the connection for wireless charging with the first external device using information updated from the power management module (e.g., the power management module 216 of FIG. 2) based on the output voltage Vout from the wireless charging IC (e.g., the wireless charging IC 214 of FIG. 2). According to an embodiment, the processor 220 may identify the connection for wired charging using information updated from the power management module 216 or the DC IC 218 as power by an external power source is wiredly applied to the power management module 216 or the DC IC 218.

In operation 420, the processor 220 according to an embodiment may identify the entry into the wireless charging standby state based on identifying the connection for wireless charging with the first external device and the connection for wired charging with the second external device. The processor 220 according to an embodiment may control the wireless charging to operate in the standby state (or mode) (e.g., low heat generation wireless charging standby mode) while performing the wired charging operation based on identifying the connection for wireless charging with the first external device and the connection for wired charging with the second external device.

In operation 430, the processor 220 according to an embodiment may control the output voltage (wireless charging voltage or target voltage) Vout of the wireless charging IC 214 to become a designated voltage based on identifying the entry into the wireless charging standby state. The processor 220 according to an embodiment may control to reduce the output voltage (wireless charging voltage or target voltage) Vout (e.g., about 5V) of the wireless charging IC 214 to a designated voltage (e.g., about 3V). According to an embodiment, the designated voltage may be a minimum voltage capable of communication for wireless power reception from the first external device.

In operation 440, the processor 220 according to an embodiment may turn off the LDO of the wireless charging IC 214 after a designated time period in a state where the output voltage Vout of the wireless charging IC 214 becomes a designated voltage. The processor 220 according to an embodiment may control (e.g., turn off) the LDO (or MLDO) included in the wireless charging IC 214 so that the output voltage Vout of the wireless charging IC 214 is removed (or cut off or become a value close to about 0) after the designated time period in a state in which the output voltage Vout of the wireless charging IC 214 is the designated voltage. According to an embodiment, the designated time may be a time taken for the output voltage Vout of the wireless charging IC 214 reduced to the designated voltage to be identified by the first external device. According to an embodiment, the processor 220 may control to allow at least one CEP signal to be transmitted to the first external device for the designated time so that the output voltage Vout of the wireless charging IC 214 reduced to the designated voltage is identified by the first external device. According to an embodiment, the designated time may be based on the number of power control packets (e.g., control error packets (CEPs)) transmitted as the output voltage Vout of the wireless charging IC 214 decreases. For example, the designated time may be Δ*t* (CEP transmission time (e.g., CEP interval min (e.g., 30 msec)))*n (natural number). The first external device according to an embodiment may transfer the power having a gradually reducing magnitude through duty control and/or operation frequency adjustment based on at least one CEP signal received from the electronic device 201 at the time of Δ*t***n*. The processor 220 according to an embodiment may perform wired charging while maintaining the wireless charging standby state (e.g., a state in which the LDO is turned off while the output voltage (wireless charging voltage or the target voltage) Vout of the wireless charging IC 214 is the designated voltage).

A method for controlling wired/wireless charging in an electronic device (e.g., the electronic device 101 of FIG. 1 or the electronic device 201 of FIG. 2) according to an embodiment may comprise identifying entry into a wireless charging standby state based on a wireless charging connection through wireless charging circuitry (e.g., the wireless charging IC 214 of FIG. 2) of the electronic device and a wired charging connection through wired charging circuitry (e.g., the DC IC 218 of FIG. 2) of the electronic device. The method according to an embodiment may comprise, upon entry into the wireless charging standby state, controlling an output voltage of the wireless charging circuitry to be a designated voltage lower than a battery charging voltage. The method according to an embodiment may comprise turning off a regulator (e.g., the LDO 314 of FIG. 3) not to provide power from the wireless charging circuitry to a power management module (e.g., the power management module 188 of FIG. 1 or the power management module 216 of FIG. 2), a designated time period after the output voltage becomes the designated voltage.

The method according to an embodiment may comprise identifying a connection for wireless charging with a first external device based on a level of a voltage of DC power rectified by rectification circuitry included in the wireless charging circuitry.

The method according to an embodiment may comprise identifying the connection for wired charging using information updated as power is wiredly applied by an external power source through a connector.

The method according to an embodiment may comprise identifying whether an ID of a first external device connected for wireless charging through the wireless charging circuitry is a designated ID.

The method according to an embodiment may comprise, when the ID of the first external device is the designated ID, turning off the wireless charging circuitry.

The method according to an embodiment may comprise, when the ID of the first external device connected for wireless charging through the wireless charging circuitry is not the designated ID, identifying the entry into the wireless charging standby state.

In the method according to an embodiment, the designated time period may include a time period taken until a state in which the output voltage of the wireless charging circuitry is dropped to the designated voltage is identified by a first external device connected for the wireless charging.

In the method according to an embodiment, the designated time period may be designated based on a number of at least one control error packet (CEP) received from a first external device which is connected for the wireless charging as the output voltage of the wireless charging circuitry is dropped to the designated voltage.

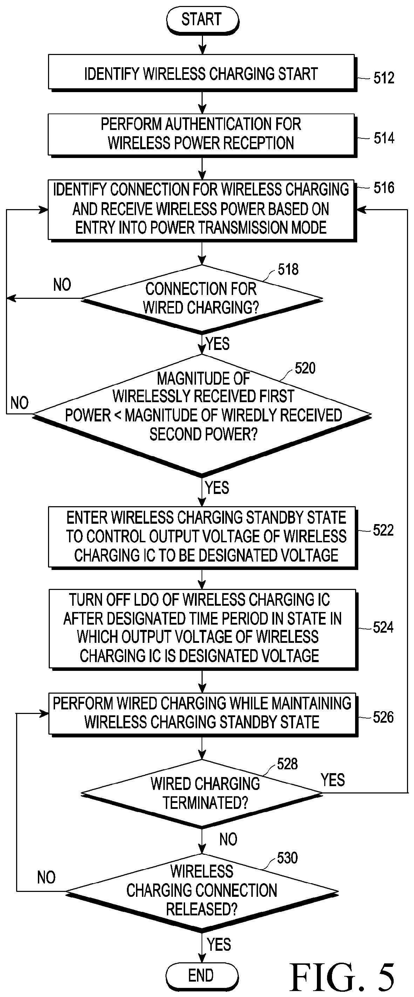

FIG. 5 is a flowchart illustrating a wired/wireless charging control operation according to whether there is a wired charging connection in a wireless charging connected state in an electronic device according to an embodiment.

Referring to FIG. 5, according to an embodiment, a processor (e.g., the processor 120 of FIG. 1 or the processor 220 of FIG. 2) of an electronic device (e.g., the electronic device 101 of FIG. 1 or the electronic device 201 of FIG. 2) may perform at least one of operations 512 to 530.

In the following embodiment, each operation may be sequentially performed, but is not necessarily performed sequentially. For example, the order of the operations may be changed, and at least two operations may be performed in parallel.

In operation 512, the processor 220 according to an embodiment may identify a wireless charging start with an external device (e.g., a first external device). The processor 220 according to an embodiment may identify a wireless charging start with the external device based on a response (e.g., signal strength packet (SSP)) corresponding to a ping signal being output by the wireless charging IC (e.g., the wireless charging IC 214 of FIG. 2) in response to the ping signal from the first external device.

In operation 514, the processor 220 according to an embodiment may perform an authentication (identification & configuration) operation for wireless power reception based on identifying the wireless charging start. The processor 220 according to an embodiment may transmit identification information or/and authentication information to the first external device when performing the authentication operation to authenticate the electronic device 201 and determine a charging scheme (normal charging or quick charging). The processor 220 according to an embodiment may enter into the power transmission mode (power transfer phase) based on the authentication success and charging scheme determination of the electronic device 201.

In operation 516, the processor 220 according to an embodiment may identify the connection for wireless charging based on the entry into the power transmission mode (power transfer phase) and wirelessly receive power. The processor 220 according to an embodiment may wirelessly receive power from the first external device using an antenna module (e.g., the antenna module 297 of FIG. 2) and the wireless charging IC 214 in the power transmission (power transfer phase) mode.

In operation 518, the processor 220 according to an embodiment may identify whether there is a connection for wired charging while the connection for wireless charging is identified. The processor 220 according to an embodiment may identify whether there is a connection for wired charging using information updated from the power management module 216 or the DC IC 218 according to whether power by the external power source is wiredly applied to the power management module (e.g., the power management module 216 of FIG. 2) or the DC IC (e.g., the DC IC 218 of FIG. 2) through the connector (e.g., a USB connector) in the power transmission (power transfer phase) mode. The processor 220 according to an embodiment may continue to perform operation 516 if the connection for wired charging is not identified in the wireless power transmission (power transfer phase) mode.

In operation 520, when the connection for wired charging is identified while the connection for wireless charging is identified, the processor 220 according to an embodiment may compare the magnitude of the wirelessly received first power with the magnitude of the wiredly received second power. The processor 220 according to an embodiment may continuously receive power wirelessly while maintaining the power transmission (power transfer phase) mode if the magnitude of the wiredly received second power is not larger than (smaller than or equal to) the magnitude of the wirelessly received first power. The processor 220 according to an embodiment may perform operation 522 if the magnitude of the wiredly received second power is larger than the magnitude of the wirelessly received first power.

In operation 522, the processor 220 according to an embodiment may enter the wireless charging standby state and control the output voltage (wireless charging voltage or target voltage) Vout of the wireless charging IC 214 to be decreased to a designated voltage. The processor 220 according to an embodiment may control the output voltage (wireless charging voltage or target voltage) Vout of the wireless charging IC 214 to become the designated voltage based on identifying entry into the wireless charging standby state while performing wired charging. The processor 220 according to an embodiment may control to reduce the output voltage (wireless charging voltage or target voltage) Vout (e.g., about 5V) of the wireless charging IC 214 to a designated voltage (e.g., about 3V). According to an embodiment, the designated voltage may be a minimum voltage capable of communicating with the first external device to receive wireless power from the first external device.

In operation 524, the processor 220 according to an embodiment may turn off the LDO of the wireless charging IC 214 after a designated time period in a state where the output voltage Vout of the wireless charging IC 214 becomes a designated voltage. The processor 220 according to an embodiment may control (e.g., turn off) the LDO (or MLDO) included in the wireless charging IC 214 so that the output voltage Vout of the wireless charging IC 214 is removed (or cut off or become a value close to about 0) after the designated time period in a state in which the output voltage Vout of the wireless charging IC 214 is the designated voltage. According to an embodiment, the designated time may be a time taken for the output voltage Vout of the wireless charging IC 214 reduced to the designated voltage to be identified by the first external device. According to an embodiment, the processor 220 may control to allow at least one CEP signal to be transmitted to the first external device for the designated time so that the output voltage Vout of the wireless charging IC 214 reduced to the designated voltage is identified by the first external device. According to an embodiment, the designated time may be based on the number of power control packets (e.g., control error packets (CEPs)) transmitted as the output voltage Vout of the wireless charging IC 214 decreases. For example, the designated time may be Δ*t* (CEP transmission time (e.g., CEP interval min (e.g., 30 msec)))*n (natural number). The first external device according to an embodiment may transfer the power having a gradually reducing magnitude through duty control and/or operation frequency adjustment based on at least one CEP signal received from the electronic device 201 at the time of Δ*t***n.*

In operation 526, the processor 220 according to an embodiment may perform wired charging while maintaining the wireless charging standby state (e.g., a state in which the LDO is turned off while the output voltage (wireless charging voltage or the target voltage) Vout of the wireless charging IC 214 is the designated voltage). According to an embodiment, in the wireless charging standby state, the LDO (e.g., the LDO 314 of FIG. 3) in the wireless charging IC 214 may be turned off, and another circuit (e.g., the rectification circuitry 312 of FIG. 3) in the wireless charging IC 214 may not be turned off. According to an embodiment, the state in which the LDO (e.g., the LDO 314 of FIG. 3) in the wireless charging IC 214 may be different from the state in which the wireless charging IC 214 is turned off. For example, in the wireless charging standby state, a response corresponding to the ping signal may be output from the wireless charging IC 214, but in the off state of the wireless charging IC 214, the response corresponding to the ping signal may not be output.

The processor 220 according to an embodiment may wait for wireless charging while receiving the first power for wired charging with the second external device and receiving the minimum power capable of communication associated with wireless charging with the first external device during wired charging in the wireless charging standby state. The processor 220 according to an embodiment may display information indicating that wired charging is being performed in the wireless charging standby state on the display (e.g., the display 160 of FIG. 1) during wired charging in the wireless charging standby state. The processor 220 according to an embodiment may stop displaying the information when the wired charging state is released in the wireless charging standby state while displaying the information indicating that wired charging is being performed in the wireless charging standby state.

In operation 528, the processor 220 according to an embodiment may identify whether wired charging is terminated during wired charging while maintaining the wireless charging standby state. The processor 220 according to an embodiment may identify the termination of the wired charging when the connection for wired charging with the second external device is released, a wired charging termination input is received from the user, or a designated wired charging termination condition is met. When the termination of the wired charging is identified, the processor 220 according to an embodiment may terminate the wireless charging standby state and enter the power transmission (power transfer phase) mode as in operation 516 to receive power wirelessly.

In operation 530, the processor 220 according to an embodiment may identify whether the wireless charging connection is released during wired charging while maintaining the wireless charging standby state. When the release of the wireless charging connection is not identified, the processor 220 according to an embodiment may perform wired charging while maintaining the wireless charging standby state as in operation 528. The processor 220 according to an embodiment may terminate the wireless charging waiting state when the wireless charging connection is released during wired charging while maintaining the wireless charging waiting state.

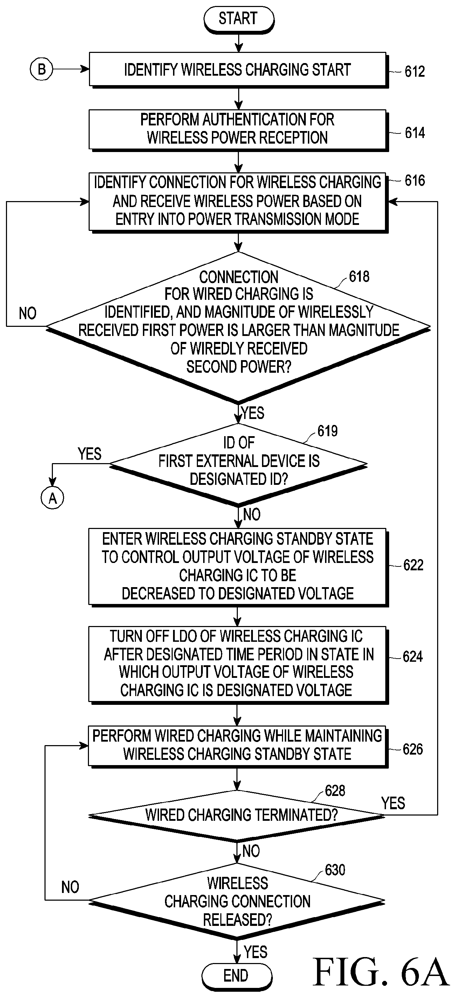

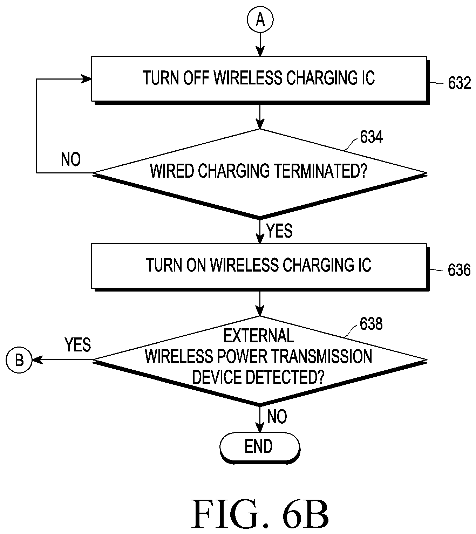

FIGS. 6A and 6B are flowcharts illustrating wired/wireless charging control operations according to an external device ID during wireless charging connection and wired charging connection in an electronic device according to an embodiment. Referring to FIGS. 6A and 6B, the processor (e.g., the processor 120 of FIG. 1 or the processor 220 of FIG. 2) of the electronic device (e.g., the electronic device 101 of FIG. 1 or the electronic device 201 of FIG. 2) according to an embodiment may perform at least one of operations 612 to 638.

FIG. 6A is a flowchart illustrating a wired/wireless charging control operation when a first external device ID during wireless charging connection and wired charging connection is an ID designated for entering into a wireless charging standby state in an electronic device according to an embodiment. FIG. 6B is a flowchart illustrating a wired/wireless charging control operation when a first external device ID during wireless charging connection and wired charging connection is an ID designated for turning off a wireless charging IC in an electronic device according to an embodiment.

In the following embodiment, each operation may be sequentially performed, but is not necessarily performed sequentially. For example, the order of the operations may be changed, and at least two operations may be performed in parallel.

First, referring to FIG. 6A, in operation 612, the processor 220 according to an embodiment may identify the start of wireless charging. The processor 220 according to an embodiment may identify a wireless charging start based on a response (e.g., signal strength packet (SSP)) corresponding to a ping signal being output by the wireless charging IC (e.g., the wireless charging IC 214 of FIG. 2) in response to the ping signal from the outside.

In operation 614, the processor 220 according to an embodiment may perform an authentication (identification & configuration) operation for wireless power reception based on identifying the wireless charging start. The processor 220 according to an embodiment may authenticate the electronic device 201 and the first external electronic device through transmission/reception of identification information (ID) or/and authentication information about each of the first external device and the electronic device 201 when performing the authentication operation and determine the charging scheme (normal charging or quick charging). The processor 220 according to an embodiment may enter into the power transmission mode (power transfer phase) based on the authentication success and charging scheme determination of the electronic device 201.

In operation 616, the processor 220 according to an embodiment may identify the connection for wireless charging based on the entry into the power transmission mode (power transfer phase) and wirelessly receive power. The processor 220 according to an embodiment may wirelessly receive power from the first external device using an antenna module (e.g., the antenna module 297 of FIG. 2) and the wireless charging IC 214 in the power transmission (power transfer phase) mode. The processor 220 according to an embodiment may identify the connection for wireless charging based on the level of voltage of DC power rectified by the rectification circuitry 312 included in the wireless charging IC 214.

In operation 618, the processor 220 according to an embodiment may identify whether the connection for wired charging is performed in a state in which the connection for wireless charging is identified, and the magnitude of the wiredly received second power is larger than the magnitude of the wirelessly received first power. The processor 220 according to an embodiment may identify a connection for wired charging using information updated from the power management module 216 or the DC IC 218 according to whether power by the external power source is wiredly applied to the power management module (e.g., the power management module 216 of FIG. 2) or the DC IC (e.g., the DC IC 218 of FIG. 2) through the connector (e.g., a USB connector) in the power transmission (power transfer phase) mode. The processor 220 according to an embodiment may continue to perform operation 616 if the connection for wired charging is not identified in the wireless power transmission (power transfer phase) mode. If the connection for wired charging is identified in the wireless power transmission (power transfer phase) mode, the processor 220 according to an embodiment may identify whether the magnitude of the wiredly received second power is larger than the magnitude of the wirelessly received first power. If the connection for wired charging is identified in the wireless power transmission (power transfer phase) mode, the processor 220 according to an embodiment may continuously receive power wirelessly while maintaining the power transmission (power transfer phase) mode if the magnitude of the wiredly received second power is not larger than (smaller than or equal to) the magnitude of the wirelessly received first power as in operation 616. If the magnitude of the wiredly received second power is larger than the magnitude of the wirelessly received first power in a state in which the connection for wired charging is identified in the wireless power transmission (power transfer phase) mode, the processor 220 according to an embodiment may perform operation 619.

In operation 619, the processor 220 according to an embodiment may identify whether the ID of the first external device is a designated ID. The processor 220 according to an embodiment may identify whether the ID of the first external device is the designated ID (e.g., an ID designated to turn off the wireless charging IC) using the identification information (ID) about the first external electronic device obtained in operation 614. When the ID of the first external device is not the designated ID, the processor 220 according to an embodiment may proceed to operation 622. When the ID of the first external device is the designated ID, the processor 220 according to an embodiment may proceed to operation 632 of FIG. 6B. The processor 220 according to an embodiment may identify the ID designated to enter the wireless charging standby state and, based on whether it is the ID designated to enter the wireless charging standby state, proceed to operation 622 when it is the ID designated to enter the wireless charging standby state and, when it is not the ID designated to enter the wireless charging standby state, proceed to operation 632.

In operation 622, the processor 220 according to an embodiment may enter the wireless charging standby state and control the output voltage (wireless charging voltage or target voltage) Vout of the wireless charging IC 214 to be decreased to a designated voltage. The processor 220 according to an embodiment may control the output voltage (wireless charging voltage or target voltage) Vout of the wireless charging IC 214 to become the designated voltage based on identifying entry into the wireless charging standby state while performing wired charging. The processor 220 according to an embodiment may control to reduce the output voltage (wireless charging voltage or target voltage) Vout (e.g., about 5V) of the wireless charging IC 214 to a designated voltage (e.g., about 3V). According to an embodiment, the designated voltage may be a minimum voltage capable of communicating with the first external device to receive wireless power from the first external device.

In operation 624, the processor 220 according to an embodiment may turn off the LDO of the wireless charging IC 214 after a designated time period in a state where the output voltage Vout of the wireless charging IC 214 becomes a designated voltage. The processor 220 according to an embodiment may control (e.g., turn off) the LDO (or MLDO) included in the wireless charging IC 214 so that the output voltage Vout of the wireless charging IC 214 is removed (or cut off or become a value close to about 0) after the designated time period in a state in which the output voltage Vout of the wireless charging IC 214 is the designated voltage. According to an embodiment, the designated time may be a time taken for the output voltage Vout of the wireless charging IC 214 reduced to the designated voltage to be identified by the first external device. According to an embodiment, the processor 220 may control to allow at least one CEP signal to be transmitted to the first external device for the designated time so that the output voltage Vout of the wireless charging IC 214 reduced to the designated voltage is identified by the first external device. According to an embodiment, the designated time may be based on the number of power control packets (e.g., control error packets (CEPs)) transmitted as the output voltage Vout of the wireless charging IC 214 decreases. For example, the designated time may be Δ*t* (CEP transmission time (e.g., CEP interval min (e.g., 30 msec)))*n (natural number). The first external device according to an embodiment may transfer the power having a gradually reducing magnitude through duty control and/or operation frequency adjustment based on at least one CEP signal received from the electronic device 201 at the time of Δ*t***n.*

In operation 626, the processor 220 according to an embodiment may perform wired charging while maintaining the wireless charging standby state (e.g., a state in which the LDO is turned off while the output voltage (wireless charging voltage or the target voltage) Vout of the wireless charging IC 214 is the designated voltage). According to an embodiment, in the wireless charging standby state, the LDO (e.g., the LDO 314 of FIG. 3) in the wireless charging IC 214 may be turned off, and another circuit (e.g., the rectification circuitry 312 of FIG. 3) in the wireless charging IC 214 may not be turned off. According to an embodiment, the state in which the LDO (e.g., the LDO 314 of FIG. 3) in the wireless charging IC 214 may be different from the state in which the wireless charging IC 214 is turned off. For example, in the wireless charging standby state, a response corresponding to the ping signal may be output from the wireless charging IC 214, but in the off state of the wireless charging IC 214, the response corresponding to the ping signal may not be output.

The processor 220 according to an embodiment may wait for wireless charging while receiving the first power for wired charging with the second external device and receiving the minimum power capable of communication associated with wireless charging with the first external device during wired charging in the wireless charging standby state. The processor 220 according to an embodiment may display information indicating that wired charging is being performed in the wireless charging standby state on the display (e.g., the display 160 of FIG. 1) during wired charging in the wireless charging standby state. The processor 220 according to an embodiment may stop displaying the information when the wired charging state is released in the wireless charging standby state while displaying the information indicating that wired charging is being performed in the wireless charging standby state.

In operation 628, the processor 220 according to an embodiment may identify whether wired charging is terminated during wired charging while maintaining the wireless charging standby state. The processor 220 according to an embodiment may identify the termination of the wired charging when the connection for wired charging with the second external device is released, a wired charging termination input is received from the user, or a designated wired charging termination condition is met. When the termination of the wired charging is identified, the processor 220 according to an embodiment may terminate the wireless charging standby state and enter the power transmission (power transfer phase) mode as in operation 616 to receive power wirelessly.

In operation 630, the processor 220 according to an embodiment may identify whether the wireless charging connection is released during wired charging while maintaining the wireless charging standby state. When the release of the wireless charging connection is not identified, the processor 220 according to an embodiment may perform wired charging while maintaining the wireless charging standby state as in operation 626. The processor 220 according to an embodiment may terminate the wireless charging waiting state when the wireless charging connection is released during wired charging while maintaining the wireless charging waiting state.

Referring to FIG. 6B, in operation 632, the processor 220 according to an embodiment may turn off the wireless charging IC 214 when the connection for wired charging is identified in the wireless power transmission mode, the magnitude of the wiredly received second power is larger than the magnitude of the wirelessly received first power, and the ID of the first external device is the ID designated to turn off the wireless charging IC. The ID designated to turn off the wireless charging IC according to an embodiment may be the ID of a device where heat generation does not occur in the wireless charging IC or another additional operation associated with the wireless charging operation is not affected although wired charging is performed in a state in which the wireless charging IC is turned off.

In operation 634, the processor 220 according to an embodiment may identify whether wired charging is terminated during wired charging in a state in which the wireless charging IC 214 is turned off. The processor 220 according to an embodiment may identify the termination of the wired charging when the connection for wired charging with the second external device is released, a wired charging termination input is received from the user, or a designated wired charging termination condition is met. When the wired charging is not terminated, the processor 220 according to an embodiment may maintain the wired charging in a state in which the wireless charging IC 214 is turned off.

In operation 636, when wired charging is terminated, the processor 220 according to an embodiment may turn on the wireless charging IC 214.

In operation 638, the processor 220 according to an embodiment may identify whether another external power transmission device (e.g., another wireless power transmission device) is detected as the wireless charging IC 214 is turned on. If another ambient external wireless power transmission device is not detected, the processor 220 according to an embodiment may proceed to the termination step of FIG. 6A.

In operation 638, if another ambient external wireless power transmission device is detected, the processor 220 according to an embodiment may return to operation 612 of FIG. 6A to identify the start of wireless charging with the detected external wireless power transmission device and perform at least one of operations 614 to 638.

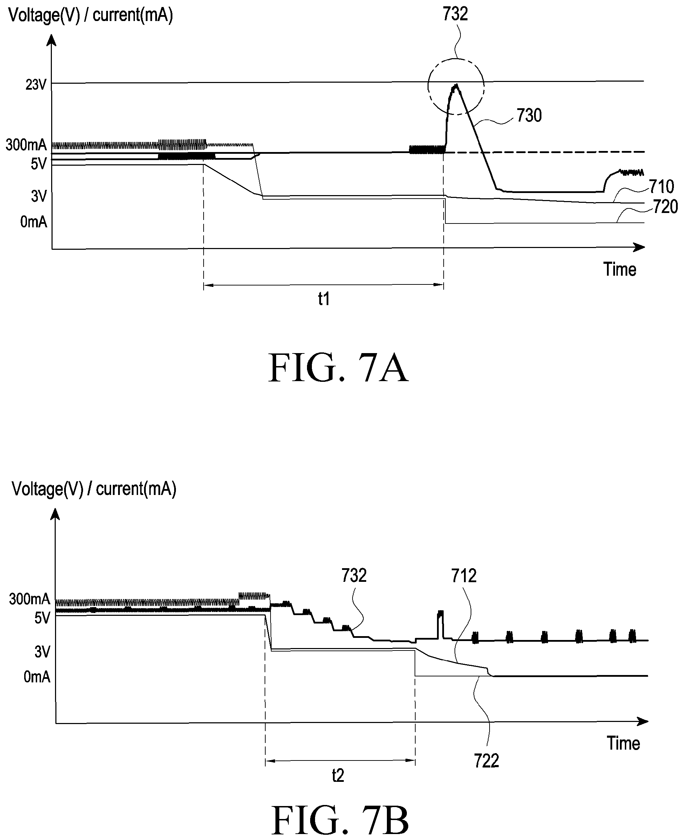

FIG. 7A is a view illustrating a voltage Vrect waveform of rectification circuitry when an output voltage Vout of a wireless charging IC is reduced and, before a designated time period, an LDO of the wireless charging IC is turned off according to an embodiment. FIG. 7B is a view illustrating a voltage Vrect waveform of rectification circuitry when an output voltage Vout of a wireless charging IC is reduced and, after a designated time period, an LDO of the wireless charging IC is turned off according to an embodiment.

First, referring to FIG. 7A, according to an embodiment, the horizontal axis may denote the time, and the vertical axis may denote the voltage and current. According to an embodiment, reference numeral 710 may denote the output voltage Vout of the wireless charging IC (e.g., the wireless charging IC 214 of FIG. 2), reference numeral 720 may denote the output current Iout of the wireless charging IC 214, and reference numeral 730 may denote the voltage Vrect of the rectification circuitry 214 in the wireless charging IC 214.

The processor 220 according to an embodiment may reduce the output voltage (e.g., about 5V) output from the wireless charging IC 214 to a designated voltage (e.g., about 3V) to become the wireless charging standby state when a connection for wireless charging and a connection for wired charging is made and, before a designated time period (e.g., before the CEP signal is transferred to the first external electronic device) t1 (e.g., about 100ms), turn off the LDO (e.g., the LDO 314 of FIG. 3) of the wireless charging IC 214 so that the output current output from the wireless charging IC 214 becomes about 0mA. As such, when reducing the voltage output from the wireless charging IC 214 and turning off the LDO 314 of the wireless charging IC 214 before the designated time period, excessive power relative to the necessary power may be applied to the rectification circuitry 214 due to a failure to react to an abrupt usage power drop in a state in which high power is received by the rectification circuitry (e.g., the rectification circuitry 312 of FIG. 3) through the antenna module (e.g., the antenna module 297 of FIG. 2), causing a peak phenomenon 732 in which the voltage Vrect of the rectification circuitry 214 is increased to a sudden voltage (e.g., about 23V).

Referring to FIG. 7B, according to an embodiment, the horizontal axis may denote the time, and the vertical axis may denote the voltage and current. According to an embodiment, reference numeral 712 may denote the output voltage Vout of the wireless charging IC 214, reference numeral 722 may denote the output current Iout of the wireless charging IC 214, and reference numeral 732 may denote the voltage Vrect of the rectification circuitry 214 in the wireless charging IC 214.

The processor 220 according to an embodiment may reduce the output voltage (e.g., about 5V) output from the wireless charging IC 214 to a designated voltage (e.g., about 3V) to become the wireless charging standby state when a connection for wireless charging and a connection for wired charging is made and, after a designated time period (e.g., after the CEP signal is transferred to the first external electronic device) t2 (e.g., about 600ms), turn off the LDO 314 of the wireless charging IC 214 so that the output current output from the wireless charging IC 214 becomes about 0mA. As such, when the voltage output from the wireless charging IC 214 is reduced and, after a designated time period, the LDO 314 of the wireless charging IC 214 is turned off, the power which gradually decreases may be received by the rectification circuitry 312 through the antenna module 297 in response to the CEP signal for a designated period, and the decreased power may be applied to the rectification circuitry 214, thus preventing the peak phenomenon in which the voltage Vrect of the rectification circuitry 214 is increased to the sudden voltage (e.g., 23V).

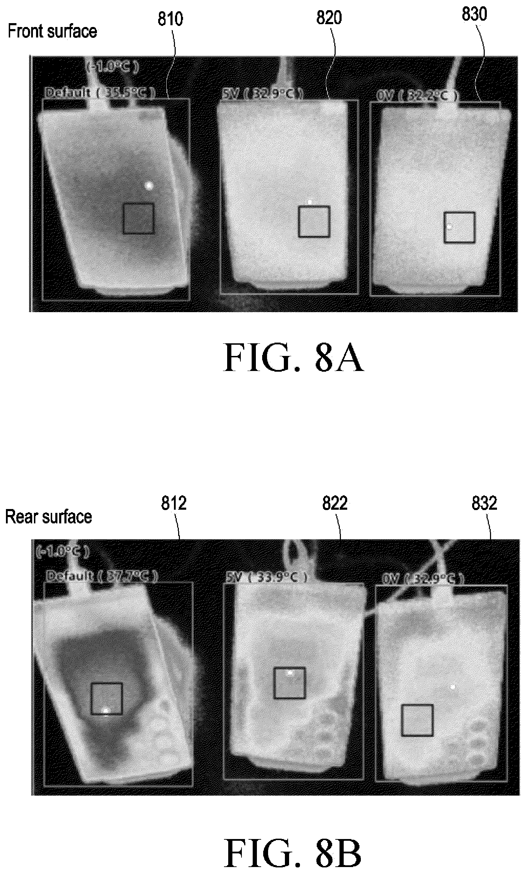

FIG. 8A is a view illustrating an example of a temperature of heat generation on a front surface of an electronic device upon connection for wireless charging and connection for wired charging in an electronic device according to an embodiment. FIG. 8B is a view illustrating an example of a temperature of heat generation on a rear surface of an electronic device upon connection for wireless charging and connection for wired charging in an electronic device according to an embodiment.

Referring to FIG. 8A, if the processor 220 according to an embodiment does not perform the wireless charging standby mode during the connection for wireless charging and the connection for wired charging in a state in which the external temperature is about -1°C (if not turning off the LDO (e.g., the LDO 314 of FIG. 3), a designated time period after decreasing the output voltage of the wireless charging IC (e.g., the wireless charging IC 214 of FIG. 2), or if not turning off the wireless charging IC 214), the temperature on the front surface of the electronic device (e.g., the electronic device 201 of FIG. 2) may be measured as about 35.5°C after about 15 minutes elapse as in reference numeral 810. If the processor 220 according to an embodiment turns off the LDO 314 a designated time period after decreasing the output voltage of the wireless charging IC 214 during the connection for wireless charging and connection for wired charging in a state in which the external temperature of the electronic device 201 is about -1°C, the temperature on the front surface of the electronic device 201 may be measured as about 32.9°C after about 15 minutes elapse as in reference numeral 820. If the processor 220 according to an embodiment turns off the wireless charging IC 214 during the connection for wireless charging and connection for wired charging in a state in which the external temperature of the electronic device 201 is about -1°C, the temperature on the front surface of the electronic device 201 may be measured as about 32.2°C after about 15 minutes elapse as in reference numeral 830.

Referring to FIG. 8B, if the processor 220 according to an embodiment does not perform the wireless charging standby mode during the connection for wireless charging and the connection for wired charging in a state in which the external temperature is about -1°C (if not turning off the LDO 314, a designated time period after decreasing the output voltage of the wireless charging IC 214, or if not turning off the wireless charging IC 214), the temperature on the rear surface of the electronic device 201 may be measured as about 37.7°C after about 15 minutes elapse as in reference numeral 812. If the processor 220 according to an embodiment turns off the LDO 314 a designated time period after decreasing the output voltage of the wireless charging IC 214 during the connection for wireless charging and connection for wired charging in a state in which the external temperature of the electronic device 201 is about -1°C, the temperature on the rear surface of the electronic device 201 may be measured as about 33.9°C after about 15 minutes elapse as in reference numeral 822. If the processor 220 according to an embodiment turns off the wireless charging IC 214 during the connection for wireless charging and connection for wired charging in a state in which the external temperature of the electronic device 201 is about -1°C, the temperature on the front surface of the electronic device 201 may be measured as about 32.9°C after about 15 minutes elapse as in reference numeral 832.

Examples of the temperatures of heat generation on the front surface of the electronic device measured during the connection for wireless charging and the connection for wired charging as illustrated in FIGS. 8A and 8B may be shown in Table 1 below.

**[Table 1]**

| | wireless charging standby mode not performed | reduce output voltage of wireless charging IC and, after designated time period, turn off LDO | turn off wireless charging IC |
|---|---|---|---|
| temperature (°C) on front surface | 35.5°C | 32.9°C | 32.2°C |
| temperature (°C) on rear surface | 37.7°C | 33.9°C | 32.9°C |

Referring to Table 1 above, when the processor 220 according to an embodiment turns off the wireless charging IC 214 during a connection for wireless charging and a connection for wired charging, heat generation may be least but, when decreasing the output voltage of the wireless charging IC 214 and, after a designated time period, turning off the LDO 314, the generation of a peak voltage in the wireless charging IC 214 may be reduced, and the heat generation may be as little as when the wireless charging IC 214 is turned off. Thus the operation of turning off the LDO a designated time period after decreasing the output voltage of the wireless charging IC may be useful. The electronic device according to an embodiment of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above. It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101 or the electronic device 301). For example, a processor (e.g., the processor 520) of the machine (e.g., the electronic device 301) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment of the disclosure, in a non-volatile storage medium storing instructions configured to, when executed by an electronic device, cause the electronic device to perform at least one operation, the at least one operation may comprise identifying entry into a wireless charging standby state based on a wireless charging connection through wireless charging circuitry of the electronic device and a wired charging connection through wired charging circuitry of the electronic device, upon entry into the wireless charging standby state, controlling an output voltage of the wireless charging circuitry to be a designated voltage lower than a battery charging voltage, and turning off a regulator not to provide power from the wireless charging circuitry to a power management module, a designated time period after the output voltage becomes the designated voltage.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101 of FIG. 1 or 201 of FIG. 2), comprising:
a battery (189 of FIG. 1 or 289 of FIG. 2);
wireless charging circuitry (214 of FIG. 2) including rectification circuitry (312 of FIG. 3) rectifying AC power wirelessly received through an antenna module (197 of FIG. 1 or 297 of FIG. 2) and a regulator (314 of FIG. 3) converting a voltage of rectified DC power into a designated battery charging voltage and outputting the designated battery charging voltage;
a power management module (188 of FIG. 1 or 216 of FIG. 2) charging the battery based on power output from the wireless charging circuitry;
wired charging circuitry (218 of FIG. 2) charging the battery based on power wiredly received through a connector;
memory (130 of FIG. 1 or 230 of FIG. 2) storing instructions; and
a processor (120 of FIG. 1 or 220 of FIG. 2) operatively connected to the power management module, the wired charging circuitry, and the memory, wherein the instructions are configured to, when executed by the processor, cause the electronic device to:
identify entry into a wireless charging standby state based on a wireless charging connection through the wireless charging circuitry and a wired charging connection through the wired charging circuitry, upon entry into the wireless charging standby state, control an output voltage of the wireless charging circuitry to be a designated voltage lower than the battery charging voltage, and turn off the regulator not to provide the power from the wireless charging circuitry to the power management module, a designated time period after the output voltage becomes the designated voltage.

2. The electronic device of claim 1, wherein the instructions is further configured to cause the electronic device to identify a connection for wireless charging with the first external device based on a level of the voltage of the DC power rectified by the rectification circuitry.

3. The electronic device of claim 1 or 2, wherein the instructions are further configured to, when executed by the processor, cause the electronic device to identify a connection for the wired charging using information updated from the power management module or the wired charging circuitry as power is wiredly applied by an external power source through the connector.

4. The electronic device of any one of claims 1 to 3, wherein the instructions are further configured to, when executed by the processor, cause the electronic device to identify whether an ID of a first external device connected for wireless charging through the wireless charging circuitry is a designated ID and, when the ID of the first external device is the designated ID, turn off the wireless charging circuitry.

5. The electronic device of any one of claims 1 to 4, wherein the instructions are further configured to, when executed by the processor, casue the electronic device to, when the ID of the first external device connected for wireless charging through the wireless charging circuitry is not the designated ID, identify the entry into the wireless charging standby state.

6. The electronic device of any one of claims 1 to 5, wherein the designated time period includes a time period taken until a state in which the output voltage of the wireless charging circuitry is dropped to the designated voltage is identified by a first external device which is a target for the wireless charging connection.

7. The electronic device of any one of claims 1 to 6, wherein the designated time period is designated based on a number of at least one control error packet (CEP) received from a first external device which is a target for the wireless charging connection as the output voltage of the wireless charging circuitry is dropped to the designated voltage.

8. A method for controlling wired/wireless charging in an electronic device (101 of FIG. 1 or 201 of FIG. 2), the method comprising:
identifying entry into a wireless charging standby state based on a wireless charging connection through wireless charging circuitry (214 of FIG. 2) of the electronic device and a wired charging connection through wired charging circuitry (218 of FIG. 2) of the electronic device;
upon entry into the wireless charging standby state, controlling an output voltage of the wireless charging circuitry to be a designated voltage lower than a battery charging voltage; and
turning off a regulator (314 of FIG. 3) not to provide power from the wireless charging circuitry to a power management module (188 of FIG. 1 or 216 of FIG. 2), a designated time period after the output voltage becomes the designated voltage.

9. The method of claim 8, comprising identifying a connection for wireless charging with a first external device based on a level of a voltage of DC power rectified by rectification circuitry included in the wireless charging circuitry.

10. The method of claim 8 or 9, comprising identifying the connection for wired charging using information updated as power is wiredly applied by an external power source through a connector.

11. The method of any one of claims 8 to 10, comprising:
identifying whether an ID of a first external device connected for wireless charging through the wireless charging circuitry is a designated ID; and
when the ID of the first external device is the designated ID, turning off the wireless charging circuitry.

12. The method of any one of claims 8 to 11, comprising, by the processor, when the ID of the first external device connected for wireless charging through the wireless charging circuitry is not the designated ID, identifying the entry into the wireless charging standby state.

13. The method of any one of claims 8 to 12, wherein the designated time period includes a time period taken until a state in which the output voltage of the wireless charging circuitry is dropped to the designated voltage is identified by a first external device connected for the wireless charging.

14. The method of any one of claims 8 to 13, wherein the designated time period is designated based on a number of at least one control error packet (CEP) received from a first external device which is connected for the wireless charging as the output voltage of the wireless charging circuitry is dropped to the designated voltage.

15. A non-volatile storage medium storing instructions configured to, when executed by an electronic device, cause the electronic device to perform at least one operation, the at least one operation comprising:
identifying entry into a wireless charging standby state based on a wireless charging connection through wireless charging circuitry of the electronic device and a wired charging connection through wired charging circuitry of the electronic device;
upon entry into the wireless charging standby state, controlling an output voltage of the wireless charging circuitry to be a designated voltage lower than a battery charging voltage; and
turning off a regulator not to provide power from the wireless charging circuitry to a power management module, a designated time period after the output voltage becomes the designated voltage.
